# EUROPEAN PATENT SPECIFICATION

(11) **EP 1 784 322 B1**
(45) Date of publication and mention of the grant of the patent: **12.12.2007**
(21) Application number: 05752613.9
(22) Date of filing: 15.06.2005
(51) Int. Cl.: B60R 21/26

(54) **A SAFETY ARRANGEMENT COMPRISING AN INFLATABLE ELEMENT AND A METHOD OF INFLATING AN INFLATABLE ELEMENT**
SICHERHEITSANORDNUNG MIT EINEM AUFBLASBAREN ELEMENT UND VERFAHREN ZUM AUFBLASEN EINES AUFBLASBAREN ELEMENTS
DISPOSITIF DE SECURITE A ELEMENT GONFLABLE ET TECHNIQUE DE GONFLAGE DUDIT ELEMENT

(30) Priority: 13.07.2004 GB 0415670
(43) Date of publication of application: 16.05.2007
(73) Proprietor: AUTOLIV DEVELOPMENT AB, 447 83 Vargarda (SE)
(72) Inventor: JOHANSSON, Mats, S-513 93 Fristad (SE); QVINT, Peter, S-447 30 Vårgårda (SE); KARLIN, Mats, S-447 30 Vårgårda (SE)
(74) Representative: Le Faou, Daniel
(86) International application number: PCT/SE2005/000907
(87) International publication number: WO 2006/006904

(56) References cited:
- DE-A1- 19 709 257
- DE-A1- 19 715 463
- US-A- 5 762 367
- US-B1- 6 186 540
- US-B1- 6 328 335

## Description

### Description of Invention

THIS INVENTION relates to a safety arrangement, and in particular concerns a safety arrangement including an inflatable element, such an air-bag, which may be inflated within a vehicle upon detection of a crash situation, to minimise the risk of injury to an occupant of the vehicle.

It is well known to provide one or more inflatable elements, such as air-bags, within a vehicle. Upon detection of a crash situation, the air-bag is inflated and expands into a region between an occupant of the vehicle and an object, such as the steering wheel or instrument panel of the vehicle, against which the vehicle occupant might otherwise be flung by forces arising from the crash.

It has previously been proposed to provide an air-bag which is, during an initial inflation stage thereof, partially filled with a combustible gas or mixture of gases, and subsequently to ignite the gas or mixture of gases to inflate the air-bag fully. An air-bag of this type is disclosed in International Patent publication No. WO 98/26960 from which the features of the preambles of claims 1 and 14 are known.

This document further discloses the provision of one or more flexible wires, each of which is fixed to an inner wall of the air-bag at one end and attached to a respective actuator at the other end. The arrangement is such that, if the air-bag inflates beyond a predetermined size the actuators are activated when the flexible wires are detached from their respective actuators, resulting in the transmission of an electrical impulse to a control device, which in turn transmits an activation signal to an ignition device, to ignite the gas or gases within the air-bag and inflate the air-bag fully.

However, if the inflation of the air-bag during the initial inflation phase is impeded, for instance by the presence of a seat occupant or a child seat, the air-bag will not inflate to a sufficient size for the flexible wires to detach from their respective actuators during the initial inflation phase, and so the actuators will not be activated. Thus, the ignition device will not be activated, and the combustible gas or gases used to inflate the air-bag during the initial inflation phase will not be ignited. This minimises the risk of a vehicle occupant being injured by the air-bag.

It is an object of the present invention to seek to provide a simplified ignition method for an air-bag of the type described above.

Accordingly, the present invention provides a safety arrangement comprising the features of claim 1.

Advantageously the flexible member is arranged so that, prior to inflation of the inflatable element, two regions thereof are adjacent one another, and so that, during inflation of the inflatable element, the two regions there of are separated, and the igniter is arranged so that separation of the two regions of the flexible member causes activation of the igniter.

Preferably, a pull element is connected between one of the two regions and the igniter, and the igniter is arranged so that pulling of the pull element from the igniter causes activation of the igniter.

Conveniently, two pull elements are provided, connecting respective ones of the two regions with the igniter.

Advantageously, prior to inflation of the inflatable element, the flexible member is configured to contain a loop so that the two regions thereof are adjacent, and a retaining arrangement is provided to hold the loop in place prior to inflation.

Preferably the retaining arrangement comprises strings, sheets or bands.

Conveniently the safety arrangement comprises two or more flexible members.

Advantageously, a pair of flexible members are provided, each of which is attached to respective pull elements of the igniter and to respective regions of the inflatable element, and wherein the igniter is arranged so that pulling of at least one of the pull elements from the igniter causes activation of the igniter.

Preferably, the flexible member is provided substantially within the inflatable element.

In one embodiment, the first and second attachment sites comprise respective portions of the inflatable element.

In an alternative embodiment, one of the attachment sites comprises a portion of the inflatable element, and the other of the connection sites comprises a part of the igniter.

Conveniently, the igniter is configured to activate upon pulling of the flexible member from the igniter.

Advantageously, the igniter comprises a pull igniter.

Preferably, the combustible gas comprises a mixture of gases.

Moreover, the present invention provides a method as defined in claim 14.

In order that the present invention may be more readily understood, embodiments thereof will now be describe, by way of example, with reference to the accompanying drawings, in which:
FIGURES 1a to 1f show stages in the deployment of a safety system embodying the present invention;
FIGURE 2 shows further detail of the safety system of Figure 1; and
FIGURES 3a and 3b show stages in the deployment of a further safety system embodying the present invention.

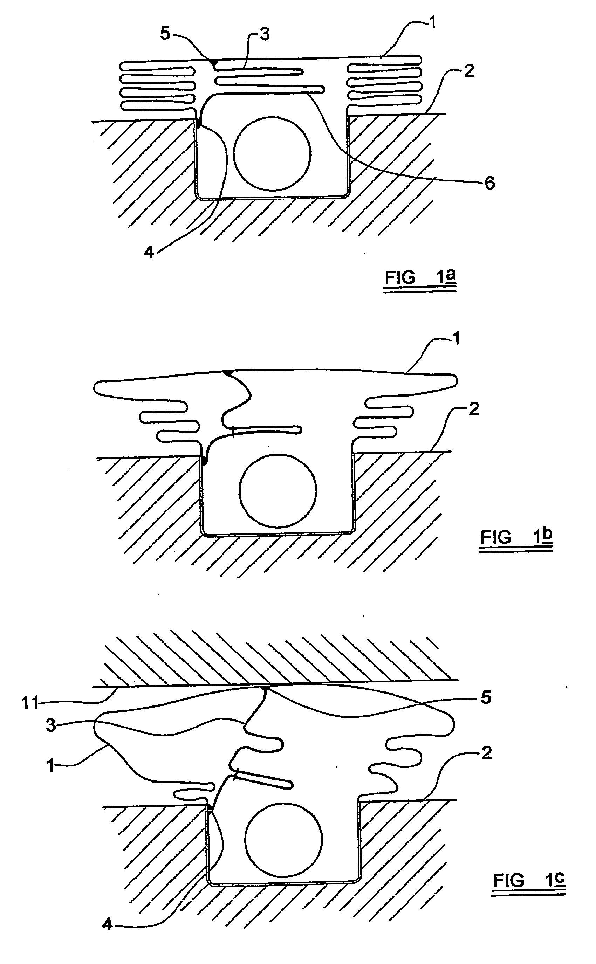

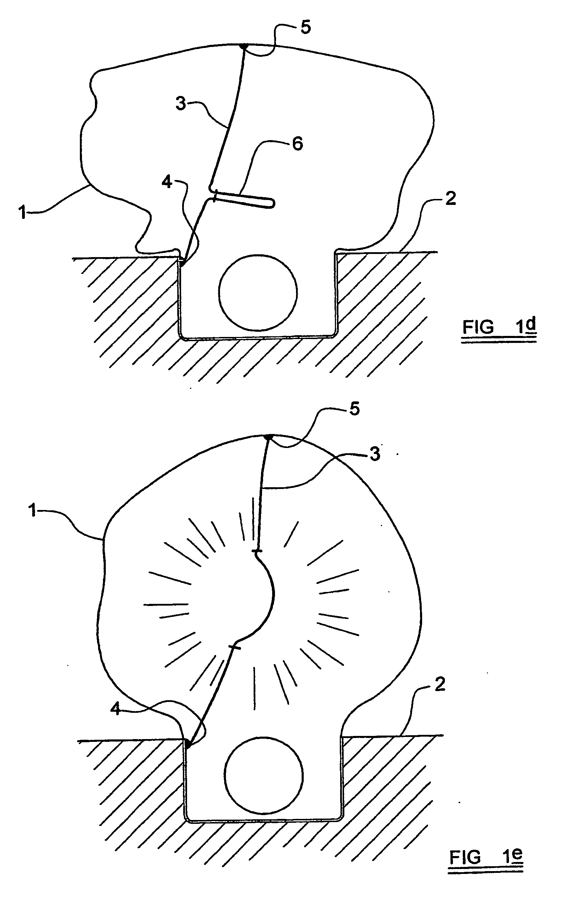

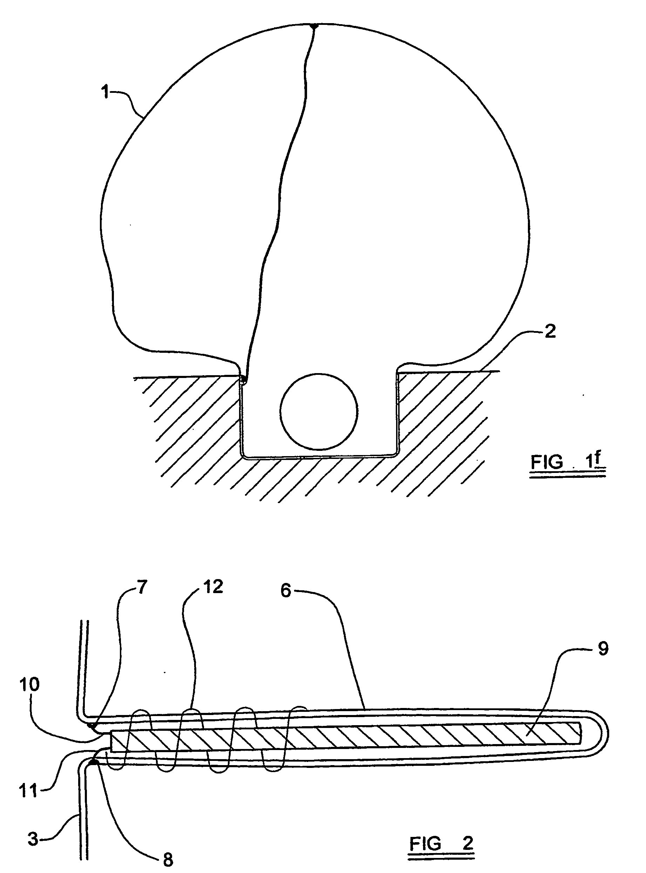

Referring firstly to Figure 1 a, an inflatable element, in the form of an air-bag 1, is shown. The air-bag 1 is mounted on a surface 2, and the surface 2 may be, for instance, a central portion of a steering wheel, a part of a dashboard, or a portion of a vehicle seat.

In an initial, uninflated state, the air-bag 1 is folded tightly, so as to occupy a minimal amount of space in the vehicle. The air-bag has an inflator to provide combustible gas to the interior of the inflatable element to commence inflation of the inflatable element, and thus to inflate the inflatable element at least partially. A flexible member, for instance comprising a strip 3 of sturdy, flexible material, is attached between a first location 4 and a second location 5 on an interior surface of the air-bag 1. The first location 4 is near the rear surface of the air-bag, that is, a portion of the air-bag 1 that is close to the surface 2 from which the air-bag 1 expands. The second location 5 is provided on a front portion of the air-bag 1 so that, when the air-bag 1 is inflated, the second location 5 is on the far side of the air-bag 1 from the portion thereof which remains attached to the surface 2. The flexible member need not comprise a strip of material, and indeed may take any form that allows the flexible member to be tightly packed within the uninflated air-bag 1 and subsequently to extend as the air-bag 1 inflates. For instance the flexible member may comprise a plurality of interconnected, rigid elements, in a chain-like formation.

The strip 3 of material is configured to have a loop 6 therein, prior to inflation of the air-bag 1. Referring to Figure 2, more details of the loop 6 in the strip 3 of material are shown. Due to the presence of the loop 6, two regions 7, 8 of the strip 3 of material are brought near to one another. Within the loop 6, which is defined by the region of the strip 3 of material between the first and second portions 7, 8 thereof, there is provided an igniter 9, which is preferably elongate in shape.

Two pull elements, such as short cables 10, 11, extend from the regions 7, 8 of the strip 3 of material that are brought near to one another by the formation of the loop 6, and are connected to the igniter 9. In preferred embodiments of the invention the igniter is configured to activate when either of the cables 10, 11 are pulled therefrom. In preferred embodiments of the invention, the igniter 9 is a "pull igniter", an example of which is disclosed in US Patent No. 5,313,888.

A pull igniter may, for example, comprise an approximately tubular body having a pyrotechnic composition mixture packed into one portion of the body and a central passageway passing therethrough. An igniter cup is positioned within the end of the central tube, and a pull wire extends through the central passageway and protrudes from the body so that a user can grasp the pull wire. The igniter cup is partially filled with an igniter mixture, and the pull wire extends through the igniter cup, with an end of the pull wire being coated with a scratch material. An exposed end of the pyrotechnic composition is covered with an easily ignitable primer material, and the outer end of the tubular body is covered with a sealant, coating or membrane to seal the body with a device against moisture or of a contaminants. When the pull wire is pulled firmly by a user, the friction generated by the passage of the scratch material through the igniter cup causes the igniter mixture to ignite, and this in turn ignites the primer material, and ultimately the pyrotechnic composition mixture. There are, however, many other ways in which a pull igniter may be constructed, and these will be readily apparent to a person who is skilled in the art. Activation of the igniter 9 will result in the combustion of combustible gas or gases in the region of the igniter 9.

Alternatively, only one the igniter 9 may be configured to activate when a selected one of the cables 10, 11 is pulled therefrom. In these embodiments, the other of the cables 10, 11 does not serve the function of a pull element, but is attached to the strip 3 of material and to the igniter 9 to ensure that the selected one of the cables 10, 11 is pulled from the igniter 9 if the looped configuration of the strip 3 of material is broken.

A retaining arrangement, comprising lengths 12 of string, wire, sheets or bands, or similar flexible material are wrapped around the loop 6, to maintain the configuration of the loop 6 and to ensure that the igniter 9 remains within the loop 6 prior to inflation of the air-bag 1. In alternative embodiments of the invention, sheets or bands may be used in place of the lengths 10 of string, and a skilled person will readily appreciate how this would be achieved. The robustness of the retaining arrangement, which may be determined, for example, by the number of lengths of string which are wrapped around the loop 6, determines the force which is required to disturb the looped configuration of the strip 3 of material. This will be described in greater detail below.

A safety system embodying the present invention is preferably equipped with one or more crash sensors, to detect a crash situation in which the air-bag 1 should be inflated. Crash sensors suitable for use with the present invention include, but are not limited to, accelerometers and impact sensors.

When one or more of the crash sensors determines that the air-bag 1 should be inflated, an initial stage of inflation begins. During this initial stage of inflation, one or more combustible gases are introduced rapidly into the interior of the air-bag 1, causing the air-bag 1 to inflate partially. Figure 1b shows the air-bag 1 beginning to inflate during this initial stage of inflation. In preferred embodiments of the invention, two separate gas-tight containers, such as bottles, are provided to introduce combustible gases into the interior of the air-bag 1 during the initial stage of inflation. One of the these gas-tight containers contains a fuel gas, such as methane or propane, and the other of the gas-tight containers contain an oxidiser gas, such as oxygen. One or more inert gases may also be provided in one or more of the gas-tight containers. During the initial phase of inflation of the air-bag 1, the gases from both of the gas-tight containers are introduced rapidly into the interior of the air-bag 1, and a skilled person will readily appreciate that there are many ways in which this may be achieved.

As discussed above, if a vehicle occupant is close to the surface 2 from which the air-bag 1 inflates, for instance if the vehicle occupant is leaning forward in his or her seat, then it may be undesirable to inflate the air-bag 1 fully, as this may result in serious injury. Also, if a child seat is mounted in front of the surface 2 from which the air-bag 1 inflates, it may be undesirable to inflate the air-bag 1 fully, as this may cause serious injury to an infant occupying the child seat.

Figure 1 c shows an obstruction 13 which contacts the front of the air-bag 1 during the initial phase of inflation thereof. The obstruction 13 may be a part of the body of a vehicle occupant, or a child seat, as discussed above. It will be appreciated that, due to the presence of the obstruction 13, the distance between the first and second locations 4, 5 to which the strip 3 of material is connected will not become sufficiently great for the strip 3 of material to become taut, since the forward progress of the front of the air-bag 1 is halted by the presence of the obstruction 13. Thus, it will be appreciated that the igniter 9, which is provided in the loop 6 in the strip 3 of material, will not be activated. Following the initial stage of inflation of the air-bag 1, therefore, the air-bag 1 will not inflate any further.

Figure 1d illustrates the case in which the obstruction 13 is not present. In this case, the air-bag 1 inflates during the initial stage of inflation thereof, and reaches the stage in which the first and second regions 4, 5 of the inner surface of the air-bag 1 to which the strip 3 of material is attached are sufficiently far apart that the strip 3 of material is taut, apart from the loop 6 provided therein, which is held together by the lengths 12 of string.

Referring to Figure 1e, the air-bag 1 then continues to inflate, so that the lengths of string 12 holding the loop 6 in place are broken, and the strip 3 of material is pulled out of the looped configuration. It will be understood that, at this point, one or both of the cables 10, 11 that extend from the regions 7, 8 of the strip 3 of material to the igniter 9 will be pulled away from the igniter 9, and, as explained above, the igniter 9 will be activated, igniting the combustible gas or gases within the air-bag 1. This will cause the air-bag 1 to inflate rapidly and reach a fully inflated state, which is shown in Figure 1f.

Thus, it will be understood that, if there is an obstruction in the patch of the air-bag 1, the air-bag 1 will only undergo the first stage of inflation. However, if the initial stage of inflation is unimpeded, the air-bag 1 will subsequently undergo a second stage of inflation, when the igniter 9 is activated, and rapidly reach a fully inflated state.

As discussed above, the strength of the retaining arrangement that maintains the looped configuration of the strip 3 of material determines the force which must be applied across the strip 3 of material for the igniter 9 to be activated. If the air bag 1 meets some resistance during the initial stage of inflation thereof, but does not meet a fixed obstruction, then it may still be desirable for the air bag 1 to undergo the second stage of inflation thereof. A skilled person will readily appreciate how the retaining arrangement may be adjusted so that the air bag 1 will react appropriately in these circumstances.

As an alternative to the above arrangement, two strips 3 of material may be provided, one end of each of which is attached to one of the first and second regions 4, 5 of the inner surface of the air-bag 1, with the other end of each being attached to one of the cables 10, 11. Thus, if the inflation of the air-bag 1 is unimpeded, both of the strips 3 of material will pull on the cables, the igniter 9 being configured so that pulling on a selected one, or on either one, of the cables causes the igniter 9 to activate.

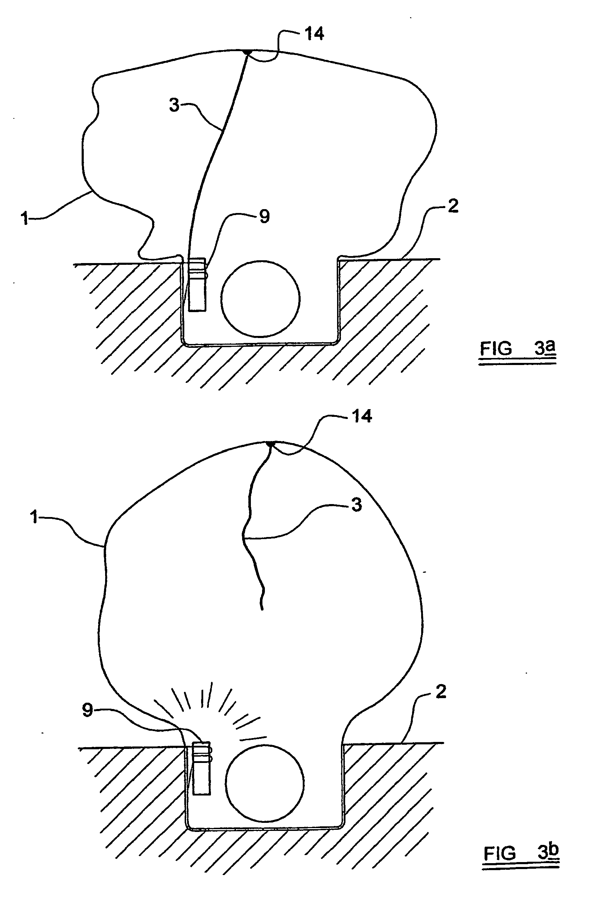

An alternative embodiment of the present invention is shown in Figures 3a and 3b. In this embodiment, the strip 3 of material is attached at one end thereof to a region 14 of the interior of the air-bag 1. The other end of the strip 3 of material is attached directly to an igniter 9, which is attached to the inner surface of the air-bag 1, near the surface 2 to which the air-bag 1 is attached. The strip 3 of material may be attached directly to the igniter 9, or may be attached thereto indirectly, for example by way of a pull element such as a short cable (not shown). The igniter 9 is again configured to activate when the strip 3 is pulled therefrom.

It will be appreciated that if an obstruction is placed in the path of the air-bag 1 during the initial phase of expansion thereof, the distance between the region 14 of the inner surface of the air-bag 1 and the igniter 9 will not become sufficiently large for the strip 3 of material to become pulled from the igniter 9, and so following the initial phase of expansion of the air-bag 1 the air-bag 1 will not inflate any further.

However, in the case where the expansion of the air-bag 1 is unimpeded, the expansion of the air-bag 1 will cause the strip 3 of material to be pulled from the igniter 9, as the distance between the region 14 of the interior surface of the air-bag 1 and the igniter 9 becomes greater than the length of the strip 3 of material. At this point, the igniter 9 will active, igniting the combustible gas or gases that have been introduced into the air-bag 1 during the initial phase of inflation thereof, and the air-bag 1 will rapidly inflate to a fully inflated state.

In the embodiments described and depicted thus far, the attachment sites to which the ends of the strip 3 of material are attached are separated from one another in a direction directly away from the surface 2 from which the air-bag 1 expands. This need not, however, be the case, and the attachment sites to which the strip 3 of material is attached may be provided in any suitable locations, for instance on opposite sides of the air-bag 1, so that the air-bag 1 will not inflate fully if the inflation of the air-bag 1 in a width direction is impeded. Indeed, the attachment sites to which the strip 3 of material is attached may be selected so that, upon inflation of the air bag 1, the distance between the attachment sites may be used to determine that the air-bag 1 has inflated to a sufficient size during the initial inflation phase thereof that it is appropriate for the igniter 9 to be activated, thus inflating the air-bag 1 fully.

It will be appreciated that the present invention provides an improved ignition method. In the above-identified prior art, the inflation of the air-bag 1 to a certain size is detected, this information is passed to a control device, and subsequently an ignition signal is generated for transmission to the igniter. This is a relatively cumbersome method, involving an extra delay, for the signals to pass between the sensors and the control device and between the control device and the igniter, and also includes a greater number of components, and hence entails a greater possibility of failure.

When used in this Specification and Claims, the terms "comprises" and "comprising" and variations thereof mean that the specified features, steps or integers are included. The terms are not to be interpreted to exclude the presence of other features, steps or components

## Claims

1. A safety arrangement comprising:
an inflatable element (1); an igniter (9);
an inflator to provide a gas to the interior of the inflatable element to inflate the inflatable element at least partially; and
a flexible member (3) having first and second portions which are respectively connected to first and second attachment sites (4,5), at least one attachment site being on the inflatable element, **characterised in that** said igniter (9) is connected to the flexible member and the gas is a combustible gas, the arrangement being such that on inflation of the inflatable element, the distance between the first and second attachment sites increases; and when the distance between the first and second portions of the flexible member exceeds a predetermined distance, the igniter is ignited, thus igniting the combustible gas within the inflatable element.

2. A safety arrangement according to Claim 1, wherein:
the flexible member (3) is arranged so that, prior to inflation of the inflatable element, two regions (7,8) thereof are adjacent one another, and so that, during inflation of the inflatable element, the two regions there of are separated; and
the igniter (9) is arranged so that separation of the two regions of the flexible member causes activation of the igniter.

3. A safety arrangement according to Claim 2, wherein a pull element (10,11) is connected between one of the two regions (7,8) and the igniter (9), and the igniter is arranged so that pulling of the pull element from the igniter causes activation of the igniter.

4. A safety arrangement according to Claim 3, wherein two pull elements (10,11) are provided, connecting respective ones of the two regions with the igniter.

5. A safety arrangement according to any one of Claims 2 to 4 wherein:
prior to inflation of the inflatable element, the flexible member (3) is configured to contain a loop (6) so that the two regions (7,8) thereof are adjacent; and
a retaining arrangement (12) is provided to hold the loop in place prior to inflation.

6. A safety arrangement according to Claim 5, wherein the retaining arrangement comprises string, wire, sheets or bands (12).

7. A safety arrangement according to any preceding Claim, comprising two or more flexible members (3).

8. A safety arrangement according to Claim 1, wherein a pair of flexible members (3) are provided, each of which is attached to respective pull elements of the igniter (9) and to respective regions of the inflatable element, and wherein the igniter is arranged so that pulling of at least one of the pull elements from the igniter causes activation of the igniter.

9. A safety arrangement according to any preceding Claim, wherein the or each flexible member (3) is provided substantially within the inflatable element.

10. A safety arrangement according to any one of the preceding Claims wherein the first and second attachment sites (4,5) comprise respective portions of the inflatable element.

11. A safety arrangement according to any one of Claims 1 to 9 wherein one of the attachment sites comprises a portion of the inflatable element (14), and the other of the connection sites comprises a part of the igniter.

12. A safety arrangement according to any preceding Claim, wherein the igniter (9) is configured to activate upon pulling of part of the flexible member from the igniter.

13. A safety arrangement according to any preceding Claim, wherein the combustible gas comprises a mixture of gases.

14. A method of inflating an inflatable element, the method comprising the steps of:
providing an inflatable element (1) and an igniter (9);
providing an inflator for providing a gas to the interior of the inflatable element to inflate the inflatable element at least partially;
providing a flexible member (3) having first and second portions; and
connecting the first and second portions to first and second attachment sites (4,5), at least one of the attachment sites being on the inflatable element and the arrangement being such that, during a first inflation phase of the inflatable element, the distance between the first and second attachment sites increases **characterised in that** the method comprises
connecting said igniter (9) to the flexible member (3) generating combustible gas from the inflator to at least partially inflate the inflatable element, and when the distance between the first and second portions of the flexible member exceeds a predetermined distance, igniting the igniter and thus igniting the combustible gas within the inflatable element.

## Patentansprüche

1. Sicherheitsvorrichtung bestehend aus:
einem aufblasbaren Element (1); einem Zünder (9);
einer Aufblasvorrichtung , um dem Inneren des aufblasbaren Elementes ein Gas zuzuführen, um das aufblasbare Element mindestens teilweise aufzublasen; und
einem flexiblen Teil (3), welches aus ersten und zweiten Abschnitten besteht, welche jeweils mit ersten und zweiten Anbringungsstellen (4, 5) verbunden sind, wobei mindestens eine Anbringungsstelle sich auf dem aufblasbaren Element befindet, **dadurch gekennzeichnet, dass** der besagte Zünder (9) mit dem flexiblen Teil verbunden ist und dass das Gas ein entzündliches Gas ist, wobei die Vorrichtung so ausgebildet ist, dass bei Aufblasen des aufblasbaren Elements die Entfernung zwischen der ersten und zweiten Anbringungsstelle zunimmt; und wenn die Entfernung zwischen dem ersten und zweiten Abschnitt des flexiblen Teils ein vorbestimmte Entfernung überschreitet, der Zünder gezündet wird, wodurch das entzündliche Gas innerhalb des aufblasbaren Elements gezündet wird.

2. Sicherheitsvorrichtung nach Anspruch 1, bei der das flexible Teil (3) so angeordnet ist, dass vor der Aufblasung des aufblasbaren Elements zwei Bereiche (7,8) davon aneinanderliegend sind und dass während des Aufblasens des aufblasbaren Elements die beiden Bereiche davon von einander getrennt sind; und
bei der der Zünder (9) so angeordnet ist, dass die Trennung der beiden Bereiche des flexiblen Teils die Aktivierung des Zünders bewirkt.

3. Sicherheitsvorrichtung nach Anspruch 2, bei der ein Zugelement (10,11) zwischen einer der beiden Bereiche (7,8) und dem Zünder (9) verbunden ist und bei der der Zünder so angeordnet ist, dass das Ziehen des Zugelements von dem Zünder die Aktivierung des Zünders bewirkt.

4. Sicherheitsvorrichtung nach Anspruch 3, bei der zwei Zugelement (10,11) vorgesehen sind, welche die Entsprechenden der beiden Bereiche mit dem Zünder verbinden.

5. Sicherheitsvorrichtung nach einem der Ansprüche 2 bis 4, bei der
vor dem Aufblasen des aufblasbaren Elements der flexible Teil (3) so ausgebildet ist, dass er eine Schlaufe (6) enthält, so dass die beiden Bereiche (7,8) davon aneinanderliegend sind; und
eine Haltevorrichtung (12) vorgesehen ist, um die Schlaufe vor dem Aufblasen in Stellung zu halten.

6. Sicherheitsvorrichtung nach Anspruch 5, bei der die Haltevorrichtung Schnur, Draht, Blätter oder Bänder (12) umfasst.

7. Sicherheitsvorrichtung nach einem der vorangehenden Ansprüche, welche zwei oder mehr flexible Teile (3) umfasst.

8. Sicherheitsvorrichtung nach Anspruch 1, bei der ein Paar flexible Teile (3) vorgesehen ist, wobei jedes mit seinem jeweiligen Zugelement des Zünders (9) verbunden ist, und zu den jeweiligen Bereichen des aufblasbaren Elements und bei der der Zünder so angeordnet ist, dass das Ziehen von mindestens einem der Zugelemente von dem Zünder die Aktivierung des Zünders bewirkt.

9. Sicherheitsvorrichtung nach einem der vorangehenden Ansprüche, bei der das oder jedes der flexible(n) Teil(e) (3) wesentlich innerhalb des aufblasbaren Elements vorgesehen sind.

10. Sicherheitsvorrichtung nach einem der vorangehenden Ansprüche, bei der die erste und zweite Anbringungsstellen (4,5) jeweils Abschnitte des aufblasbaren Elements umfassen.

11. Sicherheitsvorrichtung nach einem der Ansprüche 1 bis 9, bei der eine der Anbringungsstellen einen Abschnitt des aufblasbaren Elements (14) umfasst und die andere Anbringungsstelle einen Teil des Zünders umfasst.

12. Sicherheitsvorrichtung nach einem der vorangehenden Ansprüche, bei der der Zünder (9) so ausgebildet ist, dass er bei Ziehen eines Teils des flexiblen Teils von dem Zünder aktiviert ist.

13. Sicherheitsvorrichtung nach einem der vorangehenden Ansprüche, bei der das entzündliche Gas aus einer Mischung von Gasen besteht.

14. Verfahren zu dem Aufblasen eines aufblasbaren Elements, wobei das Verfahren aus folgenden Schritten besteht:
Bereitstellung eines aufblasbaren Elements (1) und eines Zünders (9);
Bereitstellung einer Aufblasvorrichtung, um dem Inneren des aufblasbaren Elements Luft zuzuführen, um das aufblasbare Element mindesten teilweise aufzublasen;
Bereitstellung eines flexiblen Teils (3) mit erstem und zweitem Abschnitt; und
Verbindung der ersten und zweiten Abschnitte zu der ersten und zweiten Anbringungsstelle (4,5), wobei mindestens eine der Anbringungsstellen sich auf dem aufblasbaren Element befindet und wobei die Vorrichtung so ausgebildet ist, dass während einer ersten Aufblasphase des aufblasbaren Elements, die Entfernung zwischen der ersten und der zweiten Anbringungsstelle zunimmt und **dadurch gekennzeichnet, dass** das Verfahren daraus besteht,
den besagten Zünder (9) mit dem flexiblen Teil (3) zu verbinden, wodurch von der Luftpumpe entzündliches Gas erzeugt wird, um das aufblasbare Element mindestens teilweise aufzublasen, und wenn die Entfernung zwischen den ersten und zweiten Abschnitten des flexiblen Teils eine vorbestimmte Entfernung überschreitet, den Zünder zu zünden und somit das entzündliche Gas innerhalb des aufblasbaren Elements zu zünden.

## Revendications

1. Dispositif de sécurité comprenant :
un élément gonflable (1) ; un allumeur (9);
un gonfleur pour fournir un gaz à l'intérieur de l'élément gonflable pour gonfler l'élément gonflable au moins partiellement ; et
un élément flexible (3) comprenant une première et une seconde parties respectivement raccordées à un premier et un second sites de fixation (4, 5), au moins un site de fixation étant sur l'élément gonflable, **caractérisé en ce que** ledit allumeur (9) est raccordé à l'élément flexible et le gaz est un gaz combustible, l'agencement étant tel qu'au gonflage de l'élément gonflable, la distance entre le premier et le second sites de fixation augmente ; et quand la distance entre la première et la seconde parties de l'élément flexible dépasse une distance prédéterminée, l'allumeur est allumé, allumant ainsi le gaz combustible à l'intérieur de l'élément gonflable.

2. Dispositif de sécurité selon la revendication 1, dans lequel :
l'élément flexible (3) est agencé de telle sorte que, avant le gonflage de l'élément gonflable, deux régions (7, 8) de celui-ci soient adjacentes l'une à l'autre, et de telle sorte que pendant le gonflage de l'élément gonflable, les deux régions de celui-ci soient séparées ; et
l'allumeur (9) est agencé de telle sorte que la séparation des deux régions de l'élément flexible entraîne l'activation de l'allumeur.

3. Dispositif de sécurité selon la revendication 2, dans lequel un élément de traction (10, 11) est raccordé entre l'une des deux régions (7, 8) et l'allumeur (9), et l'allumeur est agencé de telle sorte que la traction de l'élément de traction de l'allumeur entraîne l'activation de l'allumeur.

4. Dispositif de sécurité selon la revendication 3, dans lequel deux éléments de traction (10, 11) sont prévus, raccordant les régions respectives des deux régions avec l'allumeur.

5. Dispositif de sécurité selon l'une quelconque des revendications 2 à 4, dans lequel :
avant le gonflage de l'élément gonflable, l'élément flexible (3) est configuré pour contenir une boucle (6) de telle sorte que les deux régions (7, 8) de celui-ci soient adjacentes ; et
un dispositif de maintien (12) est prévu pour maintenir la boucle en place avant le gonflage.

6. Dispositif de sécurité selon la revendication 5, dans lequel le dispositif de maintien comprend une ficelle, un fil, des feuilles ou des bandes (12).

7. Dispositif de sécurité selon l'une quelconque des revendications précédentes, comprenant deux éléments flexibles (3) ou plus.

8. Dispositif de sécurité selon la revendication 1, dans lequel une paire d'éléments flexibles (3) est prévue, chacun d'eux étant fixé à des éléments de traction respectifs de l'allumeur (9) et aux régions respectives de l'élément gonflable, et dans lequel l'allumeur est agencé de telle sorte que la traction d'au moins l'un des éléments de tirage depuis l'allumeur entraîne l'activation de l'allumeur.

9. Dispositif de sécurité selon l'une quelconque des revendications précédentes, dans lequel l'élément flexible (3), ou chacun d'eux, est disposé sensiblement à l'intérieur de l'élément gonflable.

10. Dispositif de sécurité selon l'une quelconque des revendications précédentes dans lequel le premier et le second sites de fixation (4, 5) comprennent des parties respectives de l'élément gonflable.

11. Dispositif de sécurité selon l'une quelconque des revendications 1 à 9, dans lequel l'un des sites de fixation comprend une partie de l'élément gonflable (14), et l'autre des sites de raccordement comprend une partie de l'allumeur.

12. Dispositif de sécurité selon l'une quelconque des revendications précédentes, dans lequel l'allumeur (9) est configuré pour s'activer en cas de traction d'une partie de l'élément flexible à partir de l'allumeur.

13. Dispositif de sécurité selon l'une quelconque des revendications précédentes, dans lequel le gaz combustible comprend un mélange de gaz.

14. Procédé de gonflage d'un élément gonflable, ledit procédé comprenant les étapes consistant à :
fournir un élément gonflable (1) et un allumeur (9) ;
fournir un gonfleur pour alimenter un gaz à l'intérieur de l'élément gonflable pour gonfler l'élément gonflable au moins partiellement ;
fournir un élément flexible (3) comprenant une première et une seconde parties ; et
raccorder la première et la seconde parties au premier et au second sites de fixation (4, 5), au moins l'un des sites de fixation étant sur l'élément gonflable, et l'agencement étant tel que, pendant une première phase de gonflage de l'élément gonflable, la distance entre le premier et le second sites de fixation augmente, **caractérisé en ce que** ledit procédé comprend :
le raccordement dudit allumeur (9) à l'élément flexible (3) générant le gaz combustible à partir du gonfleur pour gonfler au moins partiellement l'élément gonflable, et quand la distance entre la première et la seconde parties de l'élément flexible dépasse une distance prédéterminée, l'allumage de l'allumeur et donc l'allumage du gaz combustible à l'intérieur de l'élément gonflable.
